# EUROPEAN PATENT APPLICATION

(11) **EP 0 613 079 A1**
(43) Date of publication of application: **31.08.1994**
(21) Application number: 94101779.0
(22) Date of filing: 07.02.1994
(51) Int. Cl.: G06F 3/00, G06K 11/08

(54) **Man-machine interface system**

(30) Priority: 23.02.1993 IT PN930012
(71) Applicant: ZELTRON S.p.A., I-33030 Campoformido, Udine (IT)
(72) Inventor: Cenedese, Claudio, I-33037 Pasian di Prato, Udine (IT)
(74) Representative: Busca, Luciano

(57) **Abstract**

The system comprises interface means (7) with a surface (15) on which pre-determined coded areas (ON, OFF; 1-4) are defined to represent respective control means associated with the operational members (P, EV1, EV2) of the machine. The surface (15) is continuously monitored by a television camera (8) which uses the video signals, corresponding to the image of the surface (15) it picks up, to drive an image processor (11) which in turn selectively drives said operational members (P, EV1, EV2) of the machine with a corresponding command signal when at least a respective coded area (ON, OFF; 1-4) is obscured with respect to the field of view (9) of the television camera (8) for at least a certain period of time.

## Description

This invention relates to a man-machine interface system, wherein the term "machine" as used here is meant in its broadest sense and may therefore include any device whatsoever, regardless of its complexity, which is adapted to be controlled or set by an user in view of automatically starting and performing pre-determined operational duties. In particular, but not exlusively or solely, the man-machine interface system according to the present invention may be advantageously applied to industrial-type plants and equipment.

It is widely known that each machine is substantially provided with some interface arrangement through which a user is able to set and/or control the operation of the same machine. Such interface arrangements are usually adapted to receive a command of a mechanical type (such as for instance the pressure exerted by a finger on one or several push-buttons) from a user and convert it into an electrical signal which the machine is able to recognize in order to start and/or perform a pre-determined operational duty. In a most simple case, such an interface arrangement may consist of an electric ON/OFF switch device, whereas in a more complex case it may comprise at least a panel provided with control and regulation buttons and/or knobs (a good case in point may be here a photocopying machine or a machine tool for industrial plants).

At any rate, a man-machine interface will usually comprise electro-mechanical transducers, ie. elements that require the interface to be physically associated with respective electrical connections. As it may easily be appreciated, this involves the need of associating the interface with respective wire harnesses, which make the interface quite difficult to assemble, create a number of problems in terms of safety and electrical insulation, and may also prove to be an encumbrance in certain applications where they would take up a lot of space. Furthermore, in a number of cases the interface itself, with its transducer means, may prove bulkier than actually desirable, in particular as far as its depth dimension is concerned.

It therefore is a purpose of the present invention to provide a man-machine interface system that enables the various drawbacks associated with the prior art to be substantially eliminated.

More particularly, it is a purpose of the present invention to provide a man-machine interface system that does not require any actual electrical connection to directly connect said interface with the machine, even in the case in which the latter is installed at a remote location with respect to the interface.

It is a further purpose of the present invention to provide a man-machine interface system of the afore cited type, in which the interface has very small overall dimensions, ie. takes up just a little space, in particular depthwise.

According to the present inventions, these aims are reached in a man-machine interface system that substantially embodies the features and characteristics cited in the appended claims.

The features and the advantages of the invention will be more readily understood from the following description that is given by way of non-limiting example with reference to the accompanying drawings, in which:
- Figure 1 is a schematical view of a preferred embodiment of the man-machine interface system according to the invention;
- Figure 2 is a view of an exemplary embodiment of an interface of the system shown in Figure 1;
- Figures 3 and 4 are schematical views showing, in respective operational states, an interface similar to the one shown in Figure 2;
- Figures 5 and 6 are diagrammatical representations of a video control signal, corresponding to the states shown in Figures 3 and 4, respectively; and
- Figure 7 is a block circuit diagram showing an embodiment of a component part of the system shown in Figure 1.

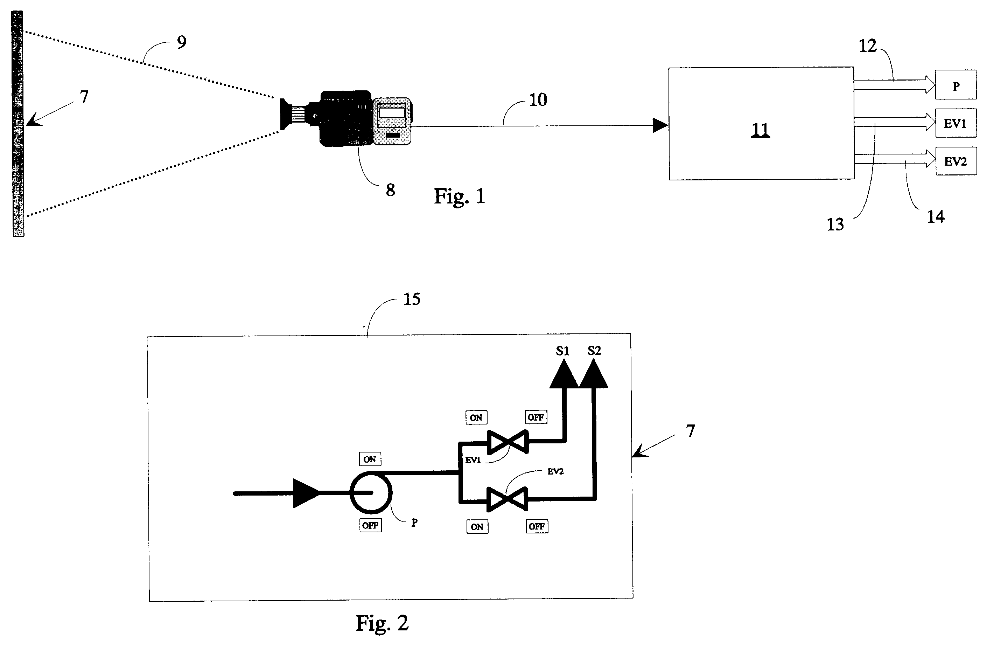

Referring in particular to Figures 1 and 2, it may be noticed that the man-machine interface system shown there comprises mainly an actual interface 7, which is embraced in a substantially continuous and fixed way by the viewing field of at least a television camera 8 and is situated in a position and at a distance that are suitable for the particular application. The system may of course also comprise appropriate illumination means of a *per sè* known type, not shown here.

The video signal generated at the output 10 of the television camera 8 drives the machine to be controlled through an image processor arrangement 11. In the example being described here, the machine is formed by a water handling installation, whose operational members to be controlled include a driving motor P for a water pump that is arranged to selectively feed two reservoirs (not shown; just schematically indicated with the references S1 and S2 in the diagram appearing in Figure 2) through respective controlled valves EV1 and EV2.

In particular, either one of said reservoirs S1, S2, or both of them, can be fed by operating the pump P and opening the valve EV1 or the valve EV2, respectively, or both valves at the same time. To this purpose, the pump P and the valves EV1 and EV2 are driven by respective outputs 12, 13, 14 of the image processor arrangement 11.

As it is shown in Figure 2, the interface 7 comprises a substantially flat, bidimensional surface 15 of a mechanical support means whatsoever, which, according to the particular application, may for instance consist of a panel or a wall . Pre-determined coded areas (for instance, ON and OFF areas) are defined in said surface 15 to represent respective operational commands associated with respective operational members P, EV1, EV2. For example, said coded ON and OFF areas may be formed by using different colours on the surface 15, preferably using a silk-screening or similar printing method, along with a diagrammatical representation of the water feeding installation to be controlled, as this is best illustrated in Figure 2.

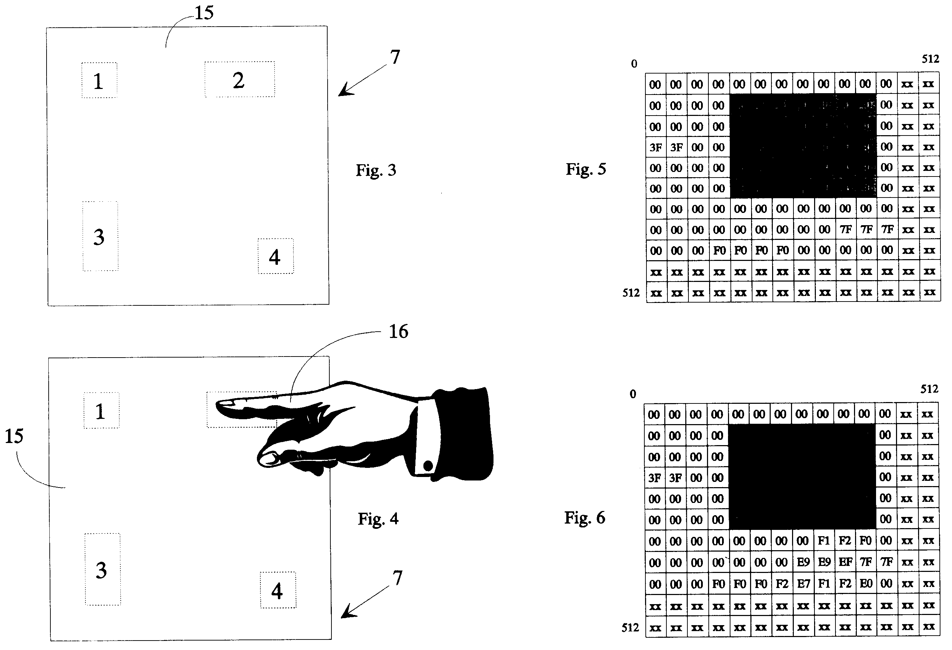

It will of course be appreciated that the machine or instazllation being controlled may be imparted different commands, which may be associated with respective areas to be correspondingly coded on the surface 15, for instance by means of digits from 1 to 4, as shown in the Figures 3 and 4. At any rate, said ON, OFF or 1-to-4 areas are preferably coded by their particular position and/or shape within said surface 15.

The television camera 8 is preferably of the type with a charge-coupled-device (CCD) image sensor, such as for instance a Javelin-matrix television camera, mod. JE7352. In a *per sè* known way, this television camera subdivides the image of the interface 7 it picks up into a matrix comprising a plurality (512 by 512) of pixels, each one of these pixels having a level of gray represented by a number that is variable from 0 (black) to 255 (white). All therebetween intermediate values represent respective levels of gray. Any alteration whatsoever of the image being picked up by the television camera 8 causes the video signal to change accordingly, so that this video signal, after appropriate processing in a substantially *per sè* known manner, is able to bring about a change in the numerical contents of the matrix.

Figure 5 is a diagrammatical representation of the video matrix related to the signal with which the television camera 8 drives the image processor arrangement 11 when it is picking up an interface 7 having a surface 15 according to the illustration in Figure 3, ie. when said interface is not being operated by an user. Due to space reasons, Figure 5 only shows the pixels which are contained in the area that is coded by the digit "2" in Figure 3, while the portions of the same matrix being indicated there by the reference "xx" are referring to the remaining part of the surface 15. In the depicted state, the image processor arrangement 11 is therefore adapted to preferably keep said operational members P, EV1, EV2 inoperative, ie. de-energized.

According to the present invention, the interface 7 can be operated by an user with any means that is capable of substantially 'obscuring', with respect to the viewing field 9 of the television camera 8 and preferably for a pre-determined minimum period of time, at least one of the coded areas in the surface 15. It should be noticed that, by the general term "obscuring' as used here, any substantial alteration is meant which involves the aspect of at least one of the coded areas being picked up, ie. monitored by the television camera 8.

In the example shown in Figure 4, the user is in fact obscuring with a finger 16 most of the coded area "2" of the interface, said coded area corresponding to a pre-determined command. It should be noticed that this command (such as for instance the actuation of the valve EV1 into its opened state) may be imparted by just passing over the area "2", without any need for any actual pressure to be exerted on the surface 15 or for the same surface to be actually touched. In response to such a command, the television camera 8 generates at its output 10 a signal that corresponds to the video matrix which is diagrammatically represented in Figure 6. In particular, by comparing Figure 5 with Figure 6 it may be clearly noticed how the numerical value of the pixels corresponding to the portion of the coded area "2" being directly obscured by the finger 16 changes in a substantial way, such a portion being represented in a darker colour in both Figures 5 and 6. Furthermore, due to possible "shadowing" effects brought about by the finger 16 being approached to the interface 7, also some pixels of the coded area "2" that are situated adjacent to the portion being directly obscured may undergo slight variations in their numerical content.

As will later be more fully explained, as a result of the above described variations in the numerical contents of the matrix shown in Figures 5 and 6, the image processor arrangement 11 generates at its output 13 a signal that causes the valve EV1 to open.

In a way similar to the above illustrated process, it is also possible, for instance, to cause the pump P to be switched on by for instance obscuring, at either the same or any different time, the coded area "1". As a result, the video matrix of the television camera 8 takes on a corresponding configuration, similar to the one shown in Figure 6, in response to which the image processor arrangement 11 will generate at its output 12 a signal capable of switching on the pump P so as to feed the reservoir S1 through the valve EV1.

It will of course be appreciated that similar commands may be imparted in the same way, by obscuring respective coded areas of the interface 7. For instance, in order to cause the valve EV1 to close and the pump P to be switched off, respective coded "OFF" areas on the surface 15 shall be obscured.

The operation of the described man-machine interface system can be implemented by setting the image processor arrangement 11 so as it is able to correctly recognize the coded areas of the interface 7 that are each time obscured, as well as to accordingly generate at its outputs 12 - 14 corresponding actuation signals for the operational members P, EV1, EV2 of the machine or installation associated therewith. For example, according to the desired level of reliability of the interface system, the image processor arrangement 11 may be set in such a way so as to be able to discriminate the commands imparted by the user from possible interferences, such as variations in the room or ambient lighting conditions, a temporary accidental obscuration of coded areas on the surface 15, a presence of foreign matters (such as insects, for instance) on the surface 15 of the interface 7, and the like. In any case, the operation logics of the image processor arrangement does not fall within the scope of the present invention and is actually within the normal capabilities of anyone skilled in the art.

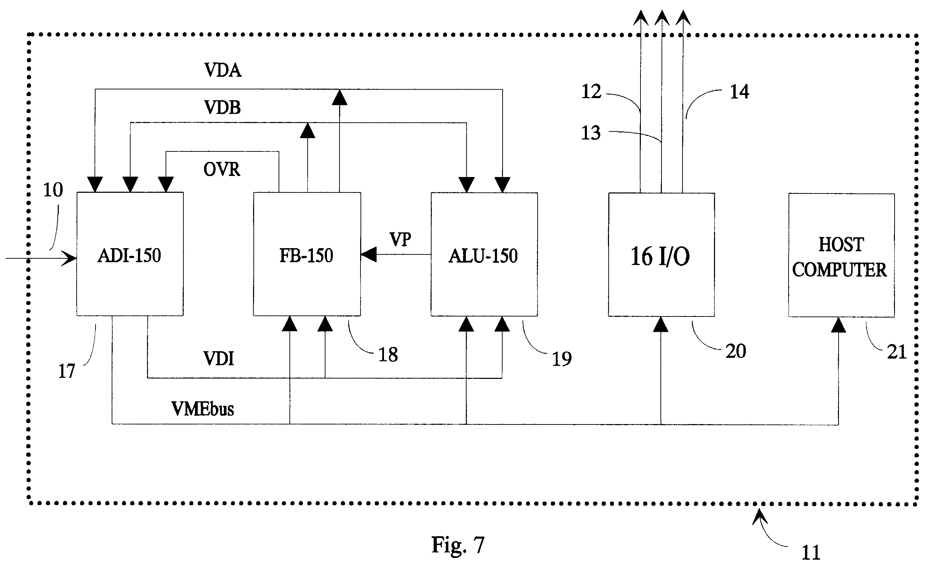

With reference to Figure 7, a preferred embodiment of the image processor arrangement 11, which may comprise component parts that are readily available on the market, is described below by way of example.

The output 10 of at least a television camera 8 drives a corresponding input of an analog/digital interface 17, which may for instance comprise a ADI-150 board. Said module 17 has an output VMEbus connected to corresponding inputs of three modules 18, 19, 20, as well as of a so-called 'host computer' 21. In a preferred way, the latter is of an AT-compatible type built around a VME bus and comprising for instance a XVME 682 board marketed by XYCOM. This module is known to in turn comprise following component parts: a 80286 CPU at 10 MHz, a RAM 1-Mbyte memory, a floppy disk controller, a hard disk controller, two RS-232 serial communication interfaces, a parallel communication interface, an EGA video adapter, a keyboard interface, a 40-Mbyte hard disk, a HD floppy disk, an EGA monochromatic monitor screen, and a keyboard. The module 18 is for instance of the FB-150 type (Frame Buffer), whereas the module 19 may be of the ALU-150 type (Pipeline Processor).

All of the above cited modules 17, 18, 19 are marketed for instance by Imaging Technology, Inc. The module 20 (as referred to here by the reference 16 I/O) may on the contrary be of the Philips PG3600 type containing 16 digital input channels and 16 digital output channels. In particular, said module 20 comprises the outputs 12, 13 and 14 that drive the pump P and the valves EV1, EV2, respectively, through respective, substantially *per sè* known (and, therefore, not shown) power interfaces.

As it can be seen in Figure 7, the module 17 has an additional output VDI (Video Data Input) which is connected to corresponding inputs of the modules 18 and 19. Furthermore, the module 18 has three outputs, which are indicated with the reference OVR, VDB and VDA, respectively, wherein said output OVR drives a corresponding input of the module 17, while the outputs VDB and VDA drive corresponding inputs of both modules 17 and 19. Finally, an input VP (Video Pipeline) of the module 18 is driven by a corresponding output of the module 19. Further information concerning the architecture illustrated in Figure 7 can be derived from the handbooks of the above cited manufacturers.

As it has been already mentioned before, the architecture of the image processor arrangement 11 has been described here, with reference to Figure 7, by way of example only, so that it may differ from case to case, according to actual needs and requirements.

At any rate, from the above description it is fully apparent that the man-machine interface system according to the present invention does not require any direct electrical connection of the interface 7 with the associated machine or installation, so that the interface itself may be advantageously installed in any appropriate, even remote location. Such an interface system, therefore, offers the greatest possible freedom and flexibility from a mechanical point of view.

It is further apparent that the interface 7 can have very small overall dimensions and, in particular, can be very thin, ie. it can have an almost negligible depth dimension. In addition, it can be built with any material and/or to any shape as considered to be appropriate for the application.

It will be appreciated that the described man-machine interface system may undergo as many modifications as considered to be appropriate without departing from the scope of the present invention, for instance in view of controlling functions that may differ from, or be more complex or simpler than the ones that have been described here by mere way of example.

It will be finally appreciated that the coded areas picked up by the television camera 8 may be situated on different planes and/or shall not necessarily lie perpendicularly to the pickup axis of the television camera.

## Claims

1. Man-machine interface system comprising interface means that are operable to impart control commands to at least an operational member of the machine, **characterized in that** said interface means (7) comprise a surface (15) on which pre-determined coded areas (ON, OFF; 1-4) are defined to represent respective controls associated with said operational member (P, EV1, EV2) of the machine, said surface (15) being adapted to be monitored in a substantially continuous manner by at least a television camera (8) which is arranged to drive, with video signals corresponding to the image it picks up of said surface (15), image processor means (11) which in turn are adapted to control said operational member (P, EV1, EV2) through a corresponding command when at least a respective coded area (ON, OFF; 1-4) is substantially obscured with respect to the field of view (9) of said television camera (8).

2. Man-machine interface system according to claim 1, **characterized in that** said image processor means (11) are capable of controlling said operational member (P, EV1, EV2) through said corresponding control when at least a respective coded area (ON, OFF, 1-4) is obscured during at least a pre-determined minimum period of time.

3. Man-machine interface system according to claim 1, **characterized in that** said surface (15) of the interface means (7) is substantially flat and bidimensional.
